# EUROPEAN PATENT APPLICATION

(11) **EP 0 681 013 A2**
(43) Date of publication of application: **08.11.1995**
(21) Application number: 94120780.5
(22) Date of filing: 27.12.1994
(51) Int. Cl.: C09D 127/18, A47J 36/02

(54) **Water paints containing decomposable products for the non-stick coating of aluminium cookware**

(30) Priority: 04.05.1994 IT MI940862
(71) Applicant: LAMBDA S.r.l., I-20070 Fombio (Prov. of Milan) (IT)
(72) Inventor: Bignami, Claudio, I-20071 Casalpusterlengo, Milan (IT)
(74) Representative: Gervasi, Gemma, Dr.

(57) **Abstract**

The following description sets forth paints consisting of aqueous dispersions of mixtures of fluorinated polymers and silicone oils, modified by the introduction of polyether groups, in addition to pigments and surfactants, containing at least a component that decomposes on paint baking, without emission of benzene or other noxious products.

## Description

### Field of the invention

The present invention relates to water paints containing decomposable products for the non-stick coating of aluminium cookware.

In particular, the following description sets forth paints consisting of aqueous dispersions of mixtures of fluorinated polymers and silicone oils, modified by the introduction of polyether groups, in addition to pigments and surfactants, containing at least a component that decomposes on paint baking, without emission of benzene or other noxious products.

The term "cookware" is used herein to mean pots and relevant lids, pans, baking pans, oven trays, toaster or oven racks, kitchen utensils, spatulas, mixing spoons, and all other utensils usually employed for food preparation and cooking.

### State of the art

The problem of food contamination, if any, by more or less prolonged contact with materials possibly releasing untoward substances is receiving a growing attention. Italian and EEC sanitary authorities have repeatedly dealt with this problem and issued ever more stringent and binding regulations.

By decree No. 220 of 26th April, 1993 the Italian Ministry of Health updated the sanitary regulations governing packaging materials, vessels, and utensils meant for coming into contact with food, in compliance with EEC Directives 82/711/EEC, 85/572/EEC, 90/128/EEC, and 92/39/EEC.

A list attached to said decree enumerates the monomers usable for the manufacture of plastic materials and articles and sets forth the analytical test limits as well as the permissible limits of migration of said substances to the contacted food.

The problem is particularly felt for cookware treated with non-stick paints.

The use of non-stick cookware has extraordinarily increased during the last 30 years. Consequently, studies have been and are still being conducted to develop non-stick paint formulations and relevant methods of application to the pot and pan surface coming into contact with food.

Several materials are suitable for cookware production, but non-stick coated pans and pots are mainly made of aluminium. Among non-stick water paints, particularly successful are those based on fluorinated polymers (PTFE). These polymers are water insoluble and are usually employed as aqueous dispersions. Considering that said fluorinated polymers can be scarcely obtained in the form of films, experts in this sector, to improve paint adhesion to metal surfaces, formulated paints based on PTFE combined with several film-forming materials.

As disclosed in US patents Nos. 2,681,324 and 3,062,764 and in British patents Nos. A-1,228,438; A-1,230,339; A-1,482,652, the substances especially used, either singly or as a mixture thereof, are poly(organosiloxanes), epoxy resins, polyamidoimides (PAI), copolymers of acrylic and methacrylic esters.

PTFEs are highly stable and do not decompose on application to the pot and by the use of same; conversely, the substances that are added to PTFE-formulations are less heat-resistant and may undergo decomposition phenomena, especially during final baking of the coatings applied, with formation, if any, of untoward substances. Said decomposition products may remain entrapped in the final coating, wherefrom they can migrate to the contacted food.

The coatings obtained from water paints based on PTFE, combined with acrylic polymers with acrylonitrile as a comonomer, contain quantities of acrylonitrile that are not admitted by the current Italian and European laws concerned with the substances coming into contact with food. The acrylic copolymers were known to decompose at the baking temperature of PTFE-based coatings, but the residues from decomposition were believed not to remain entrapped in the coating obtained.

Conversely, under industrial painting conditions, both by spraying and by rolling, the film obtained after baking PTFE-based paints with commercially available acrylic polymers contains residues from the decomposition of said acrylic polymers, which make it slightly straw-yellow and not perfectly transparent. Said defects are masked by pigments addition; however, the films obtained show an inferior aspect as far as gloss is concerned.

The discovery that the coatings obtained from paints based on PTFE combined with acrylic copolymers with acrylonitrile as a comonomer contain detectable traces of acrylonitrile, i.e. a substance that, as provided for by the law, cannot come into contact with food, caused a considerable decrease in the prospective use of said formulations for cookware.

Analogous problems associated with the presence of untoward residues in the final coating were met with PTFE-based water paints added with poly(organosiloxanes): at the baking temperatures of PTFE-based coatings, the poly(organosiloxanes) containing aryl groups yielded traces of benzene in the coating.

The use of decomposable acrylic copolymers or of poly(alkylarylsiloxanes) in PTFE-based water paint formulations is highly interesting from a technical viewpoint as it allows the obtainment of films exhibiting a good adhesion to metal substrates and a high critical thickness.

The term "critical thickness" is used by those skilled in the art to mean the maximum film thickness obtainable in a single paint application without cracks or other defects being formed on drying.

Therefore, the industry is highly interested in the production of paints yielding films of high critical thickness. However, neither acrylonitrile nor benzene are admitted in coatings coming into contact with food (as is the case of cookware). It follows that the use of the coatings described above is no more allowed.

### Technical problem

It follows that there is a need for finding PTFE-compatible substances having film-forming properties, or in any case, increasing the film-forming ability of PTFE, not decomposing at the baking temperature of PTFE or, should they decompose, not yielding untoward residues in the coatings, and, at the same time, giving paints of high critical thickness.

### Detailed description of the invention

Considering that the presence of benzene in the coatings obtained from water paints based on PTFE combined with poly(organosiloxanes) is due to the decomposition of poly(organosiloxanes) having aryl substituents, the Applicant replaced said compounds with other compounds having alkyl substituents, in particular dimethylpolysiloxanes (silicone oils) (DMPS), which are commercially available in a wide variety of molecular weights.

Unfortunately, low-molecular-weight DMPSs have a poor film-forming ability; at high dosage rates, they give opaque films because of the separation of microscope-visible DMPS microparticles. Should high-molecular-weight DMPSs be used, they will separate in the final water paint causing problems of coating stability with separation of agglomerates incompatible with the rest (formation of fisheyes).

With a view to increasing their solubility in water, DMPSs were modified by introducing polyether groups into their molecule, in particular through condensation with polyethylene glycol or polypropylene glycol.

Polyether-modified DMPSs are surface active and, therefore, are used in the paints and printing inks sector to promote additives dispersibility or superficial lubrication.

The Applicant already used polyether-modified DMPS in combination with other film-forming substances, in particular PAI, as disclosed in Italian patent No. 1,230,773.

It has now been found that polyether-modified DMPS may be homogenized in PTFE aqueous dispersions without other solvents or emulsifiers or film-forming substances being needed.

Therefore, a fundamental feature of the present invention is constituted by a PTFE-based water paint containing 0.5% to 5%, preferably 2% to 4%, polyether-modified DMPS, at a ratio by weight of (CH₃)₂SiO groups to polyether groups ranging between 8:92 and 12:88. The water paints according to the present invention provide perfectly homogeneous coatings, although polyether-modified DMPS decompose at the baking temperature of PTFE-based paint.

IR analysis revealed that the film obtained does not contain the polyether groups introduced into the DMPS molecule.

Thermogravimetric analyses of polyether-modified DMPS provided experimental evidence that, at 420°C, the product entirely decomposes in 5 minutes only. The residue left exclusively consists of the siloxane part, said residue being 8% to 12% of the original weight.

The decomposition of polyether-modified DMPSs yields neither noxious matter nor products that remain entrapped in the final coating. The product added to PTFE decomposes to a great extent during the coating baking phase, yielding volatile substances: this offers the great advantage that polyether-modified DMPS (i.e. the substance promoting PTFE film formation) is in high by wt. % amounts during coating application and in low % amounts in the final coating. Therefore, the said final coating consists of a greater quantity of PTFE (i.e. of the substance having non-stick properties).

The possibility of homogenizing polyether-modified DMPS with PTFE aqueous dispersions without other solvents or surfactants being needed allows the obtainment of water paints with a remarkably reduced VOS (volatile organic substances) load compared with other water paints meant for the same use: this is a great benefit for the post-combustion operations prescribed by the law for the treatment of the air from painting plants.

The critical thickness obtainable with the paints as per this invention is sufficient for securing a satisfactory commercial-scale use of same.

Most surprisingly, polyether-modified DMPSs exert a synergic action also on the film-forming properties of the acrylic polymers when used in combination with PTFE.

It is, therefore, possible to formulate water paints based on PTFE and polyether-modified DMPS exhibiting high values of critical thickness as obtainable with 2 to 10 times higher acrylic polymer percentage only.

Evidence has been provided that the addition of small quantities (2% to 4% by wt. of PTFE) of polyether-modified DMPS to water paints based on PTFE and acrylic polymers reduces the content of said acrylic polymers in said paints to values ranging from 1% to 2% of PTFE+DMPS, with a considerable improvement in the final coating transparency and gloss.

Until now, the water paints with such a low content of acrylic polymers have never given satisfactory results.

One of the advantages of the claimed water paints is a low VOS load during paints application.

Another advantage of the present invention is that the claimed water paints are particularly suitable for covering, as a finish, the first coating spread over the metal surface, consisting of lower-PTFE-content and, therefore, cheaper water paints.

The following examples are given to further illustrate some preferred embodiments of the present invention.

The water paints tested were prepared from products available under the following trademarks:
- Algoflon D 60, from Montefluos S.p.A.: 60% by wt. PTFE aqueous dispersion;
- Printex 85, from Degussa: carbon black;
- Rhoplex AC 61, from Rohm & Haas: 45% by wt. acrylic polymers aqueous dispersion;
- BYK 302, from Byk Chemie: polyether-modified DMPS copolymers containing 10% by wt. of methylsiloxane groups and 90% by wt. polyether groups.

### Examples 1 to 6

0.9 g of polyether-modified DMPS (BYK 302) was mixed with 149 g of Algoflon D 60 (60% by wt. PTFE aqueous dispersion containing 3.5% of surfactants) and with 200 g of distilled water, under gentle stirring, at room temperature (25°C). A transparent water paint homogeneous dispersion was obtained: dry content (DMPS+PTFE) of 91% by wt., ratio by wt. of DMPS to PTFE of 1:99.

The above procedure allowed the obtainment of various paints with a ratio of DMPS to PTFE ranging from 2:98 to 4:96 as well as of paints also added with 1% to 2% of acrylic polymer, Rhoplex AC 61.

All paints were tested to determine the critical thickness, i.e. the maximum film thickness securing the absence in the film of cracks or other defects.

The film aspect after a 5-min paint baking at 420°C and the results obtained from non-stick tests, according to British Standard 7069, are indicated in Table 1.

**Table 1**

| **Ex.No.** | **DMPS %** | **PTFE %** | **Thickness µm** | **Film aspect 5′ at 420°C** | **Non-stick** **° °** |
|---|---|---|---|---|---|
| 1 | 1 | 99 | 12-14 | transparent | 1 |
| 2 | 2 | 98 | 16-18 | transparent | 1 |
| 3 | 3 | 97 | 20-22 | transparent | 1 |
| 4 | 4 | 96 | 24-26 | transparent | 1-2 |
| 5* | 2 | 97 | 20-25 | transparent | 1 |
| 6** | 4 | 94 | 35-40 | transparent | 1 |

| | | | | | |
|---|---|---|---|---|---|
| **Remarks** * addition of 1% of acrylic polymer | | | | | |
| ** addition of 2% of acrylic polymer | | | | | |
| ° ° non-stick value (British Standard 7069) | | | | | |

As may be clearly inferred from Table 1, the presence of small per cent amounts of polyether-modified DMPS in the paint causes the formation of transparent and high-critical-thickness films. The simultaneous presence of acrylic polymer and polyether-modified DMPS allows the obtainment of perfectly transparent and high-critical-thickness films.

It is noteworthy that PTFE-based water paints with an acrylic polymer content of 2% min. always give straw- to intense yellow coloured films, depending on the acrylic polymer content.

## Claims

1. Water paints suitable for non-stick coating of aluminium pots, consisting of PTFE aqueous dispersions containing polyether-modified DMPS, characterized in that the polyether-modified DMPS content is 0.5% to 5% of PTFE+DMPS, at a ratio by weight of (CH₃)₂SiO groups to polyether groups ranging between 8:92 and 12:88.

2. The water paints according to claim 1, characterized in that the polyether-modified DMPS content is 2% to 4% of PTFE+DMPS.

3. The water paints according to claim 1, characterized in that the acrylic polymers content, which is present in addition to DMPS and PTFE, is 1% to 2% by wt. of PTFE+DMPS.

4. The water paints according to claim 1, characterized in that they are particularly suitable for covering, as a finish, the first coating spread over the metal surface, said first coating consisting of lower-PTFE-content water paints.
